# EUROPÄISCHE PATENTSCHRIFT

(11) **EP 1 908 673 B1**
(45) Veröffentlichungstag und Bekanntmachung des Hinweises auf die Patenterteilung: **09.12.2009**
(21) Anmeldenummer: 06020982.2
(22) Anmeldetag: 06.10.2006
(51) Int. Cl.: B62D 55/12, B62D 55/084

(54) **Raupenfahrzeug**
Crawler vehicle
Véhicule à chenilles

(43) Veröffentlichungstag der Anmeldung: 09.04.2008
(73) Patentinhaber: Rolic Invest Sarl, 1150 Luxembourg (LU)
(72) Erfinder: Sebastien, Dorais, Granby Quebec J2J 1B3 (CA); Pelletier, Michel, Canton de Shefford Quebec J2M 1X7 (CA); Runggaldier, Martin, 39047 St. Christina (IT)
(74) Vertreter: Eccetto, Mauro

(56) Entgegenhaltungen:
- DE-A1- 3 534 626
- JP-A- 7 237 566

## Beschreibung

Die vorliegende Erfindung bezieht sich auf ein Pistenpräparationsfahrzeug mit einem Fahrwerkrahmen und wenigstens einem Antriebsrad für eine Laufkette.

Bei Pistenpräparationsfahrzeugen werden zum Zweck einer optimierten Flächenleistung und aus Gründen der Zeiteffizienz immer häufiger Fahrzeuge mit größerer Spurbreite eingesetzt. Auf diese Weise können auch breitere Raupen, Räumschilder und Schneefräsen am Fahrzeug montiert werden, um damit kürzere Arbeitszeiten und verminderte Betriebsstunden des Fahrzeuges zu ermöglichen. Im Servicefall oder zur Überstellung der Fahrzeuge an einen anderen Ort müssen diese oftmals auf Lastkraftwagen zum anschließenden Transport auf die Strasse aufgeladen werden. Aufgrund der großen Breite dieser Pistenfahrzeuge ist es häufig notwendig, dass diese hierfür auf einem überbreiten Sondertransport befördert werden muss, was neben einem beträchtlichen Verkehrshindernis auch sehr kostenintensiv ist. Zudem sind diese Sondertransporte mittels LKW auf vielen Passstrassen und Nebenstrassen, die zu den Skigebieten führen, nicht zugelassen.

Das Dokument JP-07237566-A offenbart ein Raupenfahrzeug mit einem Fahrwerkrahmen und wenigstens einem Antriebsrad für eine Laufkette. Das Antriebsrad (zusammen mit dem Raupenrahrnen) ist zwischen einer Arbeitsstellung - in der das Antriebsrad über den Fahrwerkrahmen vorsteht - und einer Transportstellung - in der das Antriebsrad (zusammen mit dem Raupenrahmen) innerhalb der Breite des Fahrwerkrahmens liegt-bewegbar. Eine solche Anordnung entspricht dem Oberbegriff des Anspruchs 1.

Aufgabe der vorliegenden Erfindung ist es daher, ein Pistenpräparationsfahrzeug der eingangs erwähnten Gattung mit verbesserten Transporteigenschaften vorzuschlagen.

Dies wird erfindungsgemäß in einer vorteilhaften Ausgestaltung dadurch erreicht, dass das Radlager des Antriebsrads am Fahrwerkrahmen um eine horizontale Achse schwenkbar gelagert ist.

Auf diese Weise können die üblicherweise sehr massiv ausgeführten Antriebsräder - vorzugsweise auf beiden gegenüberliegenden Seiten des Pistenpräparationsfahrzeug - in eine innerhalb der Breite des Fahrzeugrahmens gelegene Position bewegt werden, sodass die Breite des zu transportierenden Fahrzeuges im Wesentlichen der maximalen Abmessung des Fahrzeugrahmens entspricht. Somit erreicht man eine Verringerung der effektiven Breite des Fahrzeuges, sodass ein Transport mittels LKW in verkehrstechnisch schwieriger zu erreichende Skigebiete überhaupt erst ermöglicht wird.

Gemäß einem bevorzugten Ausführungsbeispiel der Erfindung ist vorgesehen, dass das Antriebsrad über ein Radlager am Fahrwerkrahmen gelagert ist.

In diesem Zusammenhang kann es günstig sein, wenn das Radlager am Fahrwerkrahmen, vorzugsweise um eine horizontale Achse, schwenkbar gelagert ist. Dabei kann es vorteilhaft sein, wenn der Schwenkbereich zwischen 0° und 180°, vorzugsweise zwischen 0° und 90°, liegt.

Gemäß einem weiteren Ausführungsbeispiel der Erfindung kann vorgesehen sein, dass das Radlager in der Arbeitsstellung und/oder in der Transportstellung relativ zum Fahrwerkrahmen durch Arretiermittel fixierbar ist. Dies ist insofern wichtig, dass das Radlager insbesondere beim Transport auf der Straße keine unkontrollierten Bewegungen auszuführen vermag, Aus diesem Grund ist die relative Lage des Radlagers in Bezug zum Fahrwerkrahmen in wenigstens einer der beiden Endlagen fixierbar.

Gemäß einem weiteren Ausführungsbeispiel der Erfindung kann vorgesehen sein, dass das Antriebsrad mittels einem hydraulischen Antrieb antreibbar ist. Dabei kann es zweckmäßig sein, wenn der hydraulische Antrieb wenigstens eine Hydraulikleitung, vorzugsweise einen flexiblen Hydraulikschlauch, aufweist, die am Radlager angeordnet ist. Eine Besonderheit der gegenständlichen Erfindung liegt nunmehr darin, dass die Hydraulikleitung bei der begrenzten Bewegung zwischen der Arbeitsstellung und der Transportstellung ständig mit dem Radlager verbunden ist. Somit ist das Radlager zusammen mit den daran angeschlossenen flexiblen Hydraulikleitungen von der beschriebenen Arbeitsstellung in die Transportstellung bzw. in die umgekehrte Richtung bewegbar, ohne dass dabei die Notwendigkeit besteht, die Hydraulikleitungen zu demontieren bzw. darüber hinaus auch das Hydrauliköl abzulassen.

Auf diese Weise kann der zeit- und arbeitsaufwendige Prozess der Demontage bzw. der Montage der Hydraulikleitungen vermieden werden. Da bei einem Pistenpräparationsfahrzeug neben den eigentlichen Antriebsrädern für die Laufkette auch mehrere Tragräder zur Abstützung der Laufkette vorgesehen sind, ist es zweckmäßig, wenn die Tragräder über Lagerteile am Fahrwerkrahmen gelagert sind. Eine vorteilhafte Ausführungsform der Erfindung ergibt sich dadurch, dass die Lagerteile am Fahrwerkrahmen lösbar befestigbar, vorzugsweise verschraubbar, angeordnet sind. Auf diese Weise existieren beim Transport keine vom Fahrwerkrahmen nach außen abstehenden Teile, die ein erhöhtes Unfallrisiko herbeiführen könnten.

Weitere Einzelheiten der Erfindung werden anhand der nachstehenden Figurenbeschreibung erläutert. Darin zeigt bzw. zeigen:
- Fig. 1: eine Seitenansicht eines Pistenpräparationsfahrzeuges,
- Fig. 2: das Pistenpräparationsfahrzeug in einer Vorderansicht,
- Fig. 3: das Pistenpräparationsfahrzeug in einer Draufsicht,
- Fig. 4a: eine Detailansicht eines am Fahrwerkrahmen gelagerten Radlagers in der Arbeitsstellung in einer perspektivischen Vorderansicht,
- Fig. 4b: das Radlager in der Arbeitsstellung in einer perspektivischen Hinteransicht,
- Fig. 5: das verschwenkte Radlager in der Transportstellung in einer perspektivischen Hinteransicht,
- Fig. 6a: eine Hinteransicht des Radlagers in der Arbeitsstellung,
- Fig. 6b: eine Hinteransicht des Radlagers in der Transportstellung,
- Fig. 7a: eine Draufsicht auf das Radlager in der Arbeitsstellung,
- Fig. 7b: eine Draufsicht auf das Radlager in der Transportstellung.

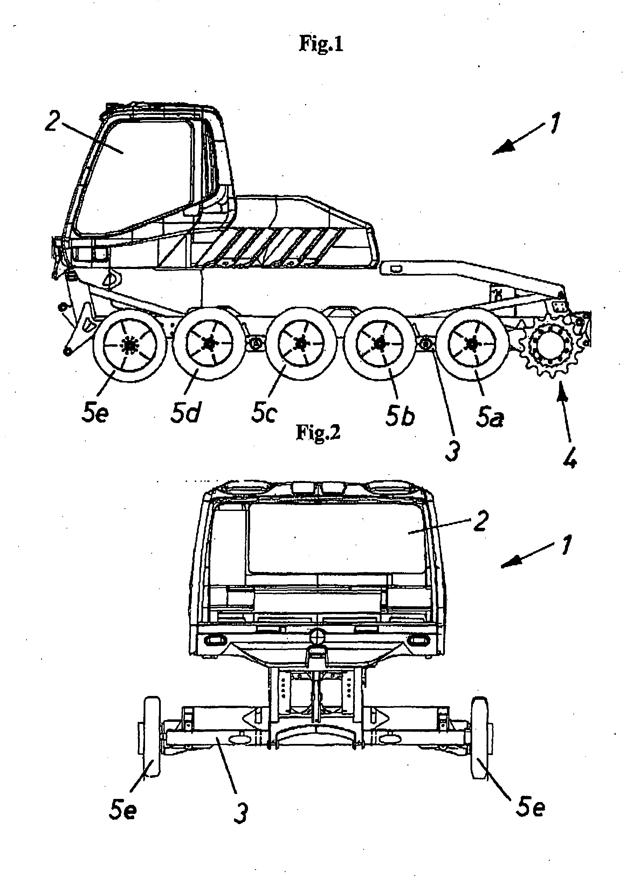

Fig. 1 zeigt eine schematische Seitenansicht eines Pisteripräparationsfahrzeuges 1 mit einer Führerkabine 2, die auf einem im Wesentlichen rechteckförmigen Fahrwerkrahmen 3 angeordnet ist. Am Fahrwerkrahmen 3 ist zudem auf jeder Seite des Pistenpräparationsfahrzeuges 1 wenigstens ein Antriebsrad 4 für eine nicht näher dargestellte Laufkette angeordnet, die zum Antrieb des Fahrzeuges vorgesehen ist. Neben dem eigentlichen Antriebsrad 4 sind zudem Tragräder 5a-5e vorgesehen, die zur Abstützung der Laufkette dienen. Die gezeigte Darstellung ist lediglich beispielhafter Natur, es können auf jeder Seite des Pistenpräparationsfahrzeuges 1 auch mehrere Antriebsräder 4 vorgesehen sein, die von der beschriebenen Arbeitsstellung in eine Transportstellung bzw. in die umgekehrte Richtung begrenzt bewegbar gelagert sind.

Fig. 2 zeigt eine Frontansicht des Pistenpräparationsfahrzeuges 1 mit der Führerkabine 2 und den auf dem Fahrwerkrahmen 3 gelagerten Tragrädern 5e auf beiden Seiten des Fahrzeuges.

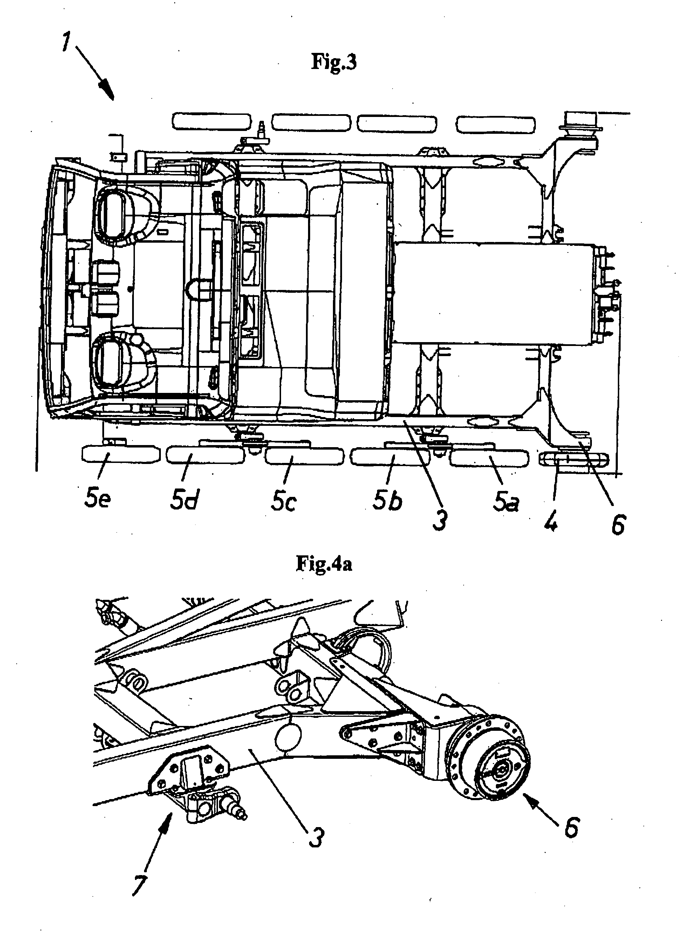

Fig. 3 zeigt eine schematische Draufsicht auf das Pistenpräparationsfahrzeug 1. Im Folgenden wird lediglich auf das untere Antriebsrad 4 sowie auf die Ausgestaltung der Tragräder 5a-5e - also auf die linke Seite des Fahrzeuges - Bezug genommen. Am Fahrwerkrahmen 3 ist neben den lastübertragenden Tragrädern 5a-5e das Antriebsrad 4 für die Laufkette vorgesehen Das Antriebsrad 4 ist über ein Radlager 6 am Fahrwerkrahmen 3 gelagert. In der gezeigten Figur befindet sich das Antriebsrad 4 in der Arbeitsstellung, d.h. in der Stellung, in der es zum üblichen Antrieb der Laufkette bei der Pistenpräparation vorgesehen ist. Gemäß der Erfindung ist auch wenigstens ein Antriebsrad 4 bzw. dessen Radlager 6 derart zum Fahrwerkrahmen 3 begrenzt bewegbar, dass das Antriebsrad 4 bzw. dessen Radlager 6 in eine Transportstellung bewegbar ist, die innerhalb der Breite B des Fahrwerkrahmens 3 liegt, so wie dies in den nachfolgenden Figuren noch näher erläutert wird.

Fig. 4a zeigt eine perspektivische Vorderansicht des Fahrwerkrahmens 3 mit demontiertem Antriebsrad 4 und demontiertem Tragrad 5a, sodass das Radlager 6 und das Lagerteil 7 für das Tragrad 5a ersichtlich ist. Das Radlager 6 befindet sich in der gezeigten Figur in der Arbeitsstellung, in der es in Bezug zum Fahrwerkrahmen 3 seitlich absteht. Das Lagerteil 7 für das Tragrad 5a weist eine lösbare Befestigungsvorrichtung zum lösbaren Verbinden mit dem Fahrwerkrahmen 3 auf. Beim Transport können die Lagerteile 7 in einfacher Weise vom Fahrwerkrahmen 3 abgeschraubt werden,

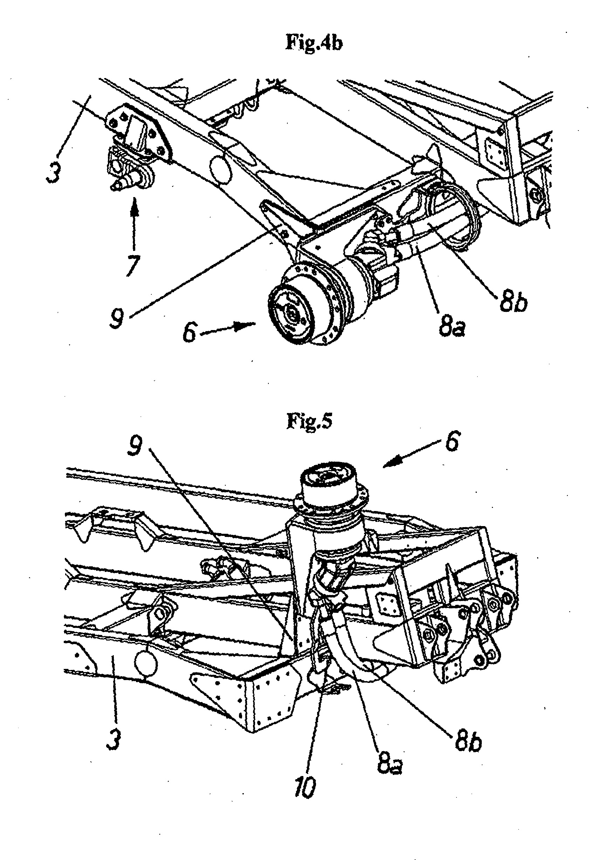

Fig. 4b zeigt die Darstellung gemäß Fig. 4a in einer perspektivischen Hinteransicht. Aus diesem Blickwinkel sind die flexiblen Hydraulikschläuche 8a und 8b ersichtlich, die Teil eines hydraulischen Antriebes für das Antriebsrad 4 sind. Zu erkennen ist zudem ein keilförmiger Befestigungsteil 9, der zum Arretieren der relativen Lage des Radlagers 6 in der Arbeitsstellung als auch in der Transportstellung dient.

Fig. 5 zeigt nun das in die Transportstellung verschwenkte Radlager 6. Hierfür wurde der keilförmige Befestigungsteil 9 (Fig. 4b) abgeschraubt, woraufhin das Radlager 6 um wenigstens eine - vorzugsweise horizontale - Achse 10 verschwenkbar ist. Das Radlager 6 liegt nun innerhalb der Breite B (Fig. 3) des Fahrzeugrahmens 3. Zu erkennen ist, dass die beiden flexiblen Hydraulikschläuche 8a und 8b bei der begrenzten Bewegung zwischen der in Fig. 4b gezeigten Arbeitsstellung und der in Fig. 5 gezeigten Transportstellung ständig mit dem Radlager 6 verbunden bleiben. Dadurch keine eine zeit- und arbeitsintensive Prozedur der Demontage bzw. der nachträglichen Montage der Hydraulikschläuche 8a und 8b vermieden werden. Der in Fig. 4b dargestellte abschraubbare Befestigungsteil 9 wird nun zum Arretieren der Transportstellung an einer anderen Stelle angeschraubt. Somit dient ein und derselbe Befestigungsteil 9 zum Arretieren beider Endlagen.

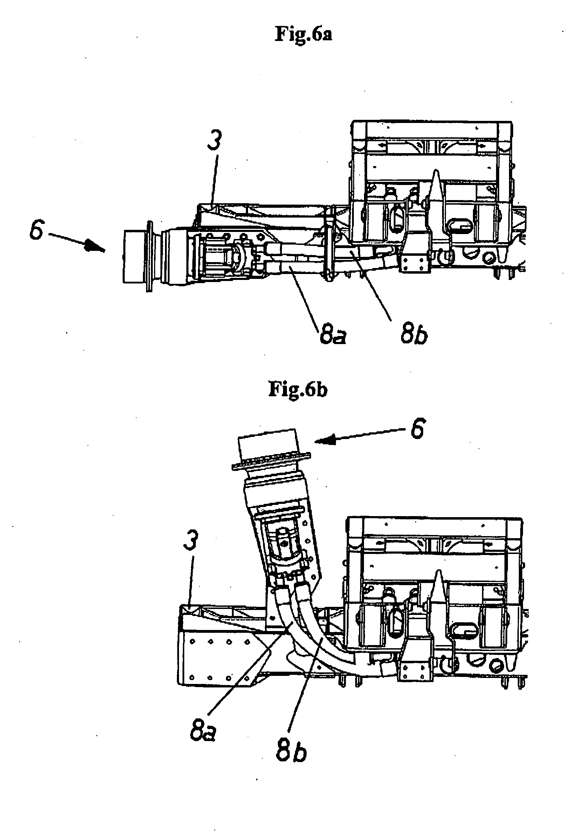

Fig. 6a und Fig. 6b zeigen die entsprechende Gegenüberstellung der Arbeitsstellung (Fig. 6a) und der Transportstellung (Fig. 6b) in einer Hinteransicht. Der im Zuge dieser Verschwenkbewegung durchgeführte Schwenkbereich des Radlagers 6 liegt vorzugsweise zwischen 0° und 90°. Günstig ist jedoch vorgesehen, dass das Radlager 6 in der Transportstellung auf jeden Fall innerhalb der Breite des Fahrwerkrahmens 3 liegt.

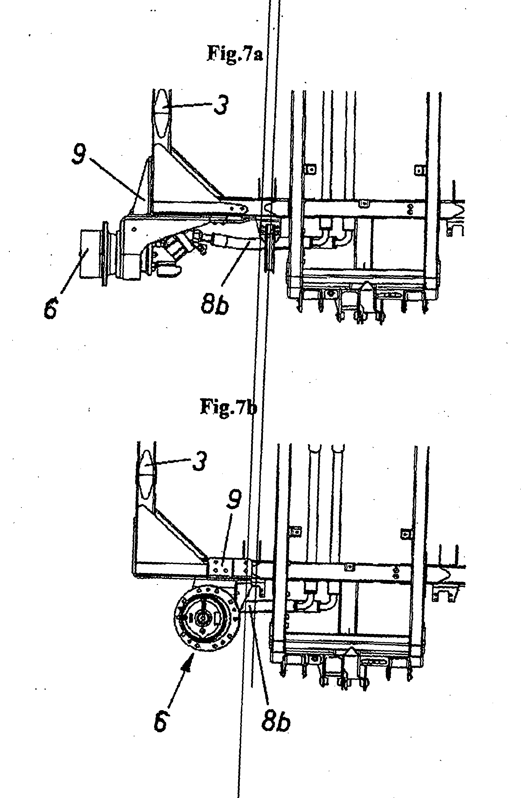

Fig. 7a und Fig. 7b zeigen die entsprechende Gegenüberstellung der Arbeitsstellung (Fig. 7a) und der Transportstellung (Fig. 7b) in einer Draufsicht. In Fig. 7a ist der Befestigungsteil 9 erkennbar, der die gezeigte Arbeitsstellung arretiert, während der Befestigungsteil 9 in Fig. 7b an einer anderen Stelle montiert wurde und dabei die Transportstellung arretiert.

Die vorliegende Erfindung beschränkt sich nicht auf das dargestellte Ausführungsbeispiel, sondern umfasst bzw. erstreckt sich auf alle Varianten und technischen Äquivalente, welche in die Reichweite der nachfolgenden Ansprüche fallen können. Auch sind die in der Beschreibung gewählten Lageangaben, wie z.B. oben, unten, seitlich usw. auf die übliche Einbaulage bzw. auf die unmittelbar beschriebene sowie dargestellte Figur bezogen und sind-bei einer Lageänderung sinngemäß auf die neue Lage zu übertragen. Die Verstellmittel zur begrenzten Bewegung des Antriebsrades 4 bzw. dessen Radlagers 6 zwischen der Arbeitsstellung und der Transportstellung können selbstverständlich auch wenigstens eine, vorzugsweise hydraulisch betreibbare, Kolben-Zylinder-Einheit aufweisen.

## Patentansprüche

1. Pistenpräparationsfahrzeug mit einem Fahzwerkrahmen (3) und wenigstens einem Antriebsrad (4) für eine Laufkette, wobei das Antriebsrad (4) zwischen einer Arbeitsstellung - in der das Antriebsrad (4) über den Fahrwerkrahmen (3) vorsteht - und einer Transportstellung - in der das Antriebsrad (4) zumindest bereichsweise, vorzugsweise vollständig, innerhalb der Breite (B) des Fahrwerkrahmens (3) liegt - begrenzt bewegbar ist, wobei das Antriebsrad (4) über ein Radlager (6) am Fahrwerkrahmen (3) gelagert ist; **dadurch gekennzeichnet, dass** das Radlager (6) am Fahrwerkrahmen (3) um eine horizontale Achse (10) schwenkbar gelagert ist.

2. Pistenpräparationsfahrzeug nach Anspruch 1, **dadurch gekennzeichnet, dass** das Radlager (6) in der Arbeitsstellung und oder in der Transportstellung relativ zum Fahrwerkrahmen (3) durch Arretiermittel fixierbar ist.

3. Pistenpräparationsfahrzeug nach Anspruch 2, **dadurch gekennzeichnet, dass** die Arretiermittel wenigstens einen Befestigungsteil (9) aufweisen, der einerseits am Fahrwerkrahmen (3) und andererseits am Radlager (6) lösbar befestigbar, vorzugsweise verschraubbar, ist.

4. Pistenpräparationsfahrzeug nach Anspruch 3, **dadurch gekennzeichnet, dass** ein und derselbe Befestigungsteil (9) zum Arretieren der Arbeitsstellung und der Transportstellung vorgesehen ist.

5. Pistenpräparationsfahrzeug nach einem der Ansprüche 1 bis 4, **dadurch gekennzeichnet, dass** das Antriebsrad (4) mittels einem hydraulischen Antrieb antreibbar ist.

6. Pistenpräparationsfahrzeug nach Anspruch 5, **dadurch gekennzeichnet, dass** der hydraulische Antrieb wenigstens eine Hydraulikleitung (8a, 8b), vorzugsweise einen flexiblen Hydraulikschlauch, aufweist, die am Radlager (6) angeordnet ist.

7. Pistenpräparationsfahrzeug nach Anspruch 6, **dadurch gekennzeichnet, dass** die Hydraulikleitung (8a, 8b) bei der begrenzten Bewegung zwischen der Arbeitsstellung und der Transportstellung ständig mit dem Radlager (6) verbunden ist.

8. Pistenpräparationsfahrzeug nach einem der Ansprüche 1, bis 7, **dadurch gekennzeichnet, dass** - vorzugsweise mehrere - Tragräder (5a-5e) für die Laufkette vorgesehen sind.

9. Pistenpräparationsfahrzeug nach Anspruch 8, **dadurch gekennzeichnet, dass** die Tragräder (5a-5e) über Lagerteile (7) am Fabrwerkrahmen (3) gelagert sind.

10. Pistenpräparationsfahrzeug nach Anspruch 9, **dadurch gekennzeichnet, dass** die Lagerteile (7) am Fahrwerkrahmen (3) lösbar befeshgbar, vorzugsweise verschraubbar, angeordnet sind.

## Claims

1. Runway preparation vehicle with a chassis frame (3) and at least one drive wheel (4) for a track chain, wherein the drive wheel (4) can be moved within limits between a working position - in which the drive wheel (4) projects beyond the chassis frame (3) - and a transport position - in which the drive wheel (4) lies at least in areas, preferably completely, within the width (B) of the chassis frame (3), wherein the drive wheel (4) is mounted on the chassis frame (3) by way of a wheel bearing (6), **characterised in that** the wheel bearing (6) is mounted on the chassis frame (3) such that it can pivot about a horizontal axis (10).

2. Runway preparation vehicle according to Claim 1, **characterised in that** the wheel bearing (6) can be fixed in the working position and/or in the transport position relative to the chassis frame (3) by locking means.

3. Runway preparation vehicle according to Claim 2, **characterised in that** the locking means comprise at least one fastening part (9) which can be fastened, preferably screwed, in a detachable manner to the chassis frame (3) on one side and to the wheel bearing (6) on the other.

4. Runway preparation vehicle according to Claim 3, **characterised in that** one and the same fastening part (9) is provided to lock the working position and the transport position.

5. Runway preparation vehicle according to any one of Claims 1 to 4, **characterised in that** the drive wheel (4) can be driven by means of a hydraulic drive.

6. Runway preparation vehicle according to Claim 5, **characterised in that** the hydraulic drive comprises at least one hydraulic line (8a, 8b), preferably a flexible hydraulic hose, which is disposed on the wheel bearing (6).

7. Runway preparation vehicle according to Claim 6, **characterised in that** the hydraulic line (8a, 8b) is constantly connected to the wheel bearing (6) during the limited movement between the working position and the transport position.

8. Runway preparation vehicle according to any one of Claims 1 to 7, **characterised in that** - preferably a plurality of - support wheels (5a-5e) are provided for the track chain.

9. Runway preparation vehicle according to Claim 8, **characterised in that** the support wheels (5a-5e) are mounted on the chassis frame (3) by way of bearing parts (7) .

10. Runway preparation vehicle according to Claim 9, **characterised in that** the bearing parts (7) can be fastened, preferably screwed, in a detachable manner to the chassis frame (3).

## Revendications

1. Véhicule de damage, comprenant un châssis (3) et au moins une roue d'entraînement (4) pour une chenille, dans lequel la roue d'entraînement (4) peut être déplacée de façon limitée entre une position de service - dans laquelle la roue d'entraînement (4) dépasse du châssis (3) - et une position de transport - dans laquelle la roue d'entraînement (4) se trouve au moins par endroits, de préférence complètement, à l'intérieur de la largeur (B) du châssis (3), dans lequel la roue d'entraînement (4) est logée au niveau du châssis (3) par l'intermédiaire d'un roulement de roue (6) ; **caractérisé en ce que** le roulement de roue (6) est logé sur le châssis (3) de façon à pouvoir pivoter autour d'un axe horizontal (10).

2. Véhicule de damage selon la revendication 1, **caractérisé en ce que** le roulement de roue (6) peut être fixé dans la position de service ou dans la position de transport par rapport au châssis (3) par des moyens de blocage.

3. Véhicule de damage selon la revendication 2, **caractérisé en ce que** les moyens de blocage présentent au moins une pièce de fixation (9) qui peut être fixée, de préférence vissée, de façon amovible, d'une part au châssis (3) et d'autre part au roulement de roue (6).

4. Véhicule de damage selon la revendication 3, **caractérisé en ce qu'**une seule et même pièce de fixation (9) est prévue pour bloquer la position de service et la position de transport.

5. Véhicule de damage selon l'une quelconque des revendications 1 à 4, **caractérisé en ce que** la roue d'entraînement (4) peut être entraînée au moyen d'un dispositif d'entraînement hydraulique.

6. Véhicule de damage selon la revendication 5, **caractérisé en ce que** le dispositif d'entraînement hydraulique présente au moins une conduite hydraulique (8a, 8b), de préférence un tuyau hydraulique souple, qui est disposé(e) au niveau du roulement de roue (6).

7. Véhicule de damage selon la revendication 6, **caractérisé en ce que** la conduite hydraulique (8a, 8b) est en permanence reliée au roulement de roue (6) lors du déplacement limité entre la position de service et la position de transport.

8. Véhicule de damage selon l'une quelconque des revendications 1 à 7, **caractérisé en ce que** des roues de support (5a à 5e) - de préférence plusieurs - sont prévues pour la chenille.

9. Véhicule de damage selon la revendication 8, **caractérisé en ce que** les roues de support (5a à 5e) sont logées au niveau du châssis (3) par l'intermédiaire de pièces de roulement (7).

10. Véhicule de damage selon la revendication 9, **caractérisé en ce que** les pièces de roulement (7) sont disposées au niveau du châssis (3) de façon à pouvoir être fixées, de préférence vissées.
